(19) Europäisches Patentamt
European Patent Office
Office européen des brevets

(11) EP 0 494 553 B1

(12) **FASCICULE DE BREVET EUROPEEN**

(45) Date de publication et mention
de la délivrance du brevet:
**08.05.1996 Bulletin 1996/19**

(51) Int Cl.⁶: **C08J 9/32**, C08J 9/00

(21) Numéro de dépôt: **91403316.2**

(22) Date de dépôt: **09.12.1991**

(54) **Matériau poreux à densité ajustable pour l'amortissement des ondes de choc ou sonores et son procédé de fabrication**

**Poröses Material mit einstellbarer Dichte für die Dämpfung von Stosswellen oder Schallwellen und Verfahren zu dessen Herstellung**

**Porous material having an adjustable density for the damping of shockwaves and soundwaves and process for its production**

(84) Etats contractants désignés:
**DE FR GB IT**

(30) Priorité: **10.12.1990 FR 9015426**

(43) Date de publication de la demande:
**15.07.1992 Bulletin 1992/29**

(73) Titulaire: **COMMISSARIAT A L'ENERGIE ATOMIQUE**
**F-75015 Paris (FR)**

(72) Inventeurs:
• **Hernandez, Lucette**
**F-37000 Tours (FR)**
• **Dudragne, François**
**F-93250 Villemonble (FR)**
• **Berigaud, Jean**
**F-37100 Tours (FR)**

(74) Mandataire: **Signore, Robert et al**
**c/o BREVATOME**
**25, rue de Ponthieu**
**F-75008 Paris (FR)**

(56) Documents cités:
EP-A- 0 296 052          GB-A- 850 467
US-A- 3 873 475          US-A- 4 663 363
US-B- 483 762

## Description

La présente invention concerne un matériau poreux à densité ajustable, pouvant être moulé ou injecté.

Dans certaines applications industrielles, on a besoin d'éléments qui ont pour fonction d'amortir des ondes sonores ou des ondes de choc. Dans ce cas, ces éléments sont constitués en métaux poreux, réalisés généralement à l'aide de frittés métalliques, nickel fritté par exemple. Deux caractéristiques de ces métaux poreux sont notamment utilisées :

- la porosité qui introduit des espaces vides dans le matériau, le taux de porosité pouvant atteindre 50 à 70% du volume de la pièce ;
- la densité de la pièce qui doit être, de préférence, supérieure à 1 et qui, de plus, doit pouvoir être ajustée en fonction de l'application. Cette densité doit pouvoir évoluer entre 1 et 5.

Compte tenu des contraintes précédentes, l'utilisation de métal poreux présente un certain nombre d'inconvénients que l'on rappellera maintenant.

La réalisation de pièces en métal poreux est d'un coût relativemenet élevé à cause du processus de fabrication, dont on résume ci-après les principales étapes :

1°) Réalisation de pièces massives et poreuses par métallurgie des poudres suivant le programme suivant :

- approvisionnement de matière première ;
- remplissage manuel de moules en graphite dont la forme et les dimensions sont liées à celles des pièces finales à obtenir ;
- frittage dans un four tunnel à une température élevée, de l'ordre de 800 à 1000°C, régulée à ± 5°C et sous atmosphère réductrice constituée d'un mélange $N_2+H_2$ contrôlé à l'entrée, et qui pose des problèmes de sécurité.

2°) Usinage pour obtenir les pièces finies.

Cet usinage nécessite l'utilisation d'outils spéciaux, en diamant de préférence, ou éventuellemenet en carbure de tungstène. Il présente, en outre, des difficultés de réglage des conditions de coupe (angle et vitesse), qui doivent être particulièrement bien étudiées, pour éviter une densification par repoussage du métal en surface.

Les pièces obtenues sont fragiles du fait de leur nature et présentent une porosité ouverte, ce qui interdit leur utilisation dans des atmosphères qui comportent des vapeurs, ou dans des liquides, ainsi que la mesure de leur densité par immersion sans un revêtement étanche qui, habituellement, est réalisé avec un vernis, ce qui fausse la mesure.

Il n'est pas facile, à l'aide de métaux poreux, de réaliser des pièces de dimensions importantes (supérieures de 2 à 3 dizaines de cm). Enfin, l'utilisation de pièces en métal dans des structures organiques pose des problèmes de contraintes mécaniques, liées aux valeurs très différentes des coefficients de dilatation et qui peuvent conduire à des détériorations rédhibitoires.

Pour pallier ces inconvénients, et notamment, limiter les coûts de fabrication, on a envisagé, depuis un certain temps, l'utilisation de matériaux à base de constituants organiques et minéraux, dont la mise en oeuvre est simple, comparée à celle des métaux poreux, car on peut utiliser les méthodes de coulage ou d'injection.

C'est ainsi que l'on sait réaliser des mousses syntactiques obtenues en incorporant dans une matrice de résine, ou un autre produit de liaison, des microsphères creuses à paroi mince, microsphères qui peuvent être en verre, carbone, céramique ou produit organique. On obtient ainsi un matériau qui satisfait à l'exigence de porosité, et qui en outre, présente des caractéristiques thermomécaniques satisfaisantes, et notamment, un coefficient de dilatation important qui permet son utilisation dans des structures organiques et qui ne se dégrade pas sous les effets thermiques au cours de sa vie. Mais dans le cas des applications acoustiques envisagées dans la présente demande, ces matériaux ont l'inconvénient d'être trop légers, puisque leurs densités sont voisines de 1 ou inférieures à 1.

On sait, par ailleurs, réaliser des blocs, des panneaux ou des plaques à l'aide de produits organiques chargés de poudres de métaux ou de métalloïdes, tels que le carbone ou le fer. Les matériaux obtenus permettent d'obtenir une densité élevée, mais ne presentent pas de porosité suffisante.

La présente invention a précisément pour objet un matériau poreux à densité ajustable comprise entre 2 et 3 qui permet d'associer les caractéristiques précédentes de porosité et de densité au sein d'un même produit, et ce, d'une manière simple à mettre en oeuvre.

Ce matériau poreux à densité ajustable, pour amortir des ondes sonores ou des ondes de choc, se caractérise en ce qu'il est constitué d'un mélange composite comprenant une résine en proportion de 24,4% à 17,7% en poids, des microsphères creuses à paroi mince en proportion de 0,6 à 0,3% en poids et un métal ou alliage métallique lourd, la proportion de métal dans le mélange étant de l'ordre de 75% à 82%.

Le matériau organique est de préférence une résine thermodurcissable, thermoplastique, radioréticulable ou vulcanisable, telle que : polyépoxydes, polyuréthane, polysiloxane, uréeformol, caoutchoucs dérivés.

Les microsphères creuses peuvent être indifféremment minérales ou organiques. Leur diamètre est de préférence compris entre 0,1 µm et 100 µm.

Le métal ou l'alliage, utilisé sous forme de poudre est choisi de manière à ce que sa densité soit la plus élevée possible. Quant à la granulométrie, elle est adaptée aux besoins dans chaque cas particulier.

Le matériau de l'invention est particulièrement avantageux, car les microsphères creuses lui confèrent la porosité recherchée, tandis que le métal permet d'atteindre la densité voulue. De plus la porosité est une porosité fermée puisqu'elle est constituée par les espaces internes des microsphères. Cette caractéristique permet l'utilisation du matériau dans des milieux qui comportent des vapeurs, ou des milieux liquides.

En faisant varier la proportion des microsphères, on ajuste la proportion de l'espace vide dans le matériau. En faisant varier la proportion de métal on confère au matériau, la densité recherchée. La proportion de matière organique doit rester suffisante pour conserver au matériau final les propriétés mécaniques et thermiques recherchées, et notamment, lui permettre de pouvoir être coulé ou injecté. Ces proportions permettent la fabrication des pièces et leur utilisation, notamment, dans les domaines d'application qui nécessitent l'amortissement des ondes.

Un autre avantage du matériau réside dans le fait qu'on peut métalliser les microsphères par des procédés classiques. Cette métallisation confère alors au matériau la propriété d'être conducteur électrique.

La présente invention a également pour objet un procédé de préparation d'un matériau poreux à densité ajustable qui se caractérise en ce qu'il comporte les étapes suivantes :

- choix et détermination de la proportion pondérale de chacun des constituants du mélange ternaire en fonction de la densité finale recherchée pour le matériau ;
- préparation de la matière organique et incorporation du métal sous forme pulvérulente dans cette matière organique en maintenant le mélange sous agitation vigoureuse ;
- incorporation au mélange précédent par petites quantités des microsphères sous agitation lente ;
- homogénéisation du produit obtenu ;
- dégazage du produit obtenu sous vide ;
- transfert du mélange obtenu dans un moule et polymérisation du matériau organique en liaison avec un moyen pour éviter la décantation des particules métalliques lourdes.

Selon des caractéristiques secondaires, mais intéressantes, de la présente invention :

- le moyen pour éviter la décantation des particules métalliques lourdes consiste à utiliser, pour réaliser le mélange, un composant organique à viscosité élevée et à accélérer sa polymérisation.
- le moyen pour éviter la décantation des particules métalliques lourdes consiste à utiliser, pour réaliser le mélange, un composant organique solide à la température ambiante, à le mélanger aux autres composants sous forme pulvérulente et à le polymériser à chaud.

- le moyen pour éviter la décantation des particules métalliques lourdes consiste à utiliser, pour réaliser le mélange, un moule tournant autour d'un axe horizontal à une vitesse supérieure à celle qui correspondrait à un début de décantation des particules métalliques et inférieure à celle qui tendrait à concentrer ces mêmes particules sur les parois du moule par effet centrifuge.

A titre d'exemple, on peut citer la fabrication de pièces de forme conique, dont le diamètre à la base varie de 20 à 30 cm et la hauteur de 4 à 6 cm.

Le matériau utilisé est constitué :

a) d'une poudre métallique de tungstène, dont la granulométrie est de 12 microns (fournie par la Société des Poudres Métalliques de Senecourt).

b) d'une résine bicomposant de type époxy (Société Hexcel France), composée d'une base (réf. EPO 95) et d'un durcisseur aminé (réf. EPO 95b).

Le produit est préparé par mélange intime des deux composants :

- résine 100 parties en poids,
- durcisseur 17 parties en poids.

La viscosité du mélange en cours de polymérisation après 60 mn est inférieure à 600 mPa.s.

c) de microsphères creuses, organiques, Expancel de (Société Kemanord) de densité $2.10^{-2}$.

Les proportions utilisées sont les suivantes :

|  | % masse | % volume |
|---|---|---|
| Poudre de tungstène | 76,46 | 9,00 |
| Résine EPO 95 | 22,94 | 45,34 |
| Microsphères | 0,6 | 45,66 |
|  | 100 | 100 |

Dans d'autres exemples de réalisations on a adopté des proportions massiques qui sont comprises dans les fourchettes suivantes, les valeurs extrêmes correspondant à des produits effectivement réalisés :

- tungstène        75 à 82%
- résine        24,4 à 17,7 %
- microsphères        0,6 à 0,3 %

Les densités obtenues sont comprises entre 2 et 3.

La mise en oeuvre se fait par mélange après incorporation des trois constituants.

1°) Réalisation de la résine

La résine est constituée de 100 parties en poids de base epoxy EPO 95 et de 17 parties en poids de catalyseur aminé EPO 95B.

Les deux constituants sont intimement mélangés sous agitation mécanique.

2°) Incorporation du tungstène

La quantité de tungstène préalablement pesée est incorporée par petites portions à la résine en maintenant une agitation vigoureuse.

3°) Incorporation de l'Expancel DE

L'Expancel DE est incorporé par très petites quantités au mélange précédent sous agitation lente (produit très léger). En fin d'incorporation, on augmente la vitesse de mélangeage et on brasse jusqu'à obtention d'une pâte homogène.

4°) Dégazage

Le mélange final est dégazé pendant 5 minutes sous vide.

5°) Coulée dans le moule

La coulée se fait à vitesse lente.

Les pièces obtenues présentent un certain nombre de caractéristiques avantageuses.

- Etat de surface : les méthodes de fabrication par coulée ou injection conduisent à des pièces dont les surfaces sont obtenues à la cote finale sans usinage, à l'exception d'emplacements éventuels de trous d'arrivée et de départ qui nécessitent un simple surfaçage à l'outil.
- Porosité : c'est une porosité fermée qui permet l'utilisation des pièces dans des milieux comportant des vapeurs, ou des liquides.
- Coût : pour une pièce conique finie de 1 kg, le coût final lorsqu'on utilise le matériau, objet du brevet, est de trois à quatre fois moins élevé que celui de la même pièce en métal fritté, pour des performances techniques identiques.
- Coefficient de dilatation linéaire :

  $\alpha_{-20}^{0} = 36.10^{-6}{}^{\circ}C^{-1}$ ; $\alpha_{0}^{40} = 52.10^{-6}{}^{\circ}C^{-1}$

  Ce sont des valeurs qui sont du même ordre de grandeur que celles des produits organiques. Les pièces réalisées en matériau de l'invention peuvent donc être utilisées dans des structures organiques sans risque de dommage dû aux variations de température, dans le cours de la vie thermique des ensembles concernés, puisque les dilatations différentielles restent de peu d'importance.
- Compression :

| | |
|---|---|
| Contrainte maximale au palier | 35 MPa. |
| Contrainte module tangent | 2500 MPa. |

- Viscosité du mélange :

| | | |
|---|---|---|
| Viscosité | t = 0s | η = 50 Pa.s |
| | t = 1 h | η = 80 Pa.s |
| | t = 2h30 | η =650 Pa.s |

(t = 0s : 10 mn après la fin du mélangeage).

## Revendications

**1.** Matériau poreux pour l'amortissement des ondes de choc et des ondes sonores, à densité ajustable comprise entre 2 et 3, caractérisé en ce qu'il est constitué d'un mélange composite comprenant une résine en proportion de 24,4 à 17,7% en poids, des microsphères creuses à paroi mince en proportion de 0,6 à 0,3% en poids et un métal ou alliage métallique lourd, la proportion de métal dans le mélange étant de l'ordre de 75% à 82%.

**2.** Matériau poreux selon la revendication 1, caractérisé en ce que la résine est choisie parmi les résines thermodurcissables, thermoplastiques, radioréticulables et vulcanisables.

**3.** Matériau poreux selon la revendication 2, caractérisé en ce que la résine est choisie dans le groupe comprenant les polyépoxydes, le polyuréthane, le polysiloxane, l'uréeformol et les caoutchoucs dérivés.

**4.** Matériau poreux selon l'une quelconque des revendications 1 à 3, caractérisé en ce que les microsphères creuses sont en une matière minérale.

**5.** Matériau poreux selon l'une quelconque des revendications 1 à 3, caractérisé en ce que les microsphères creuses sont en une matière organique.

**6.** Matériau poreux selon l'une quelconque des revendications 4 et 5, caractérisé en ce que les microsphères creuses ont un diamètre compris, de préférence entre 0,1 µm et 100 µm.

**7.** Procédé de préparation d'un matériau microporeux selon l'une quelconque des revendications 1 à 6 précédentes, caractérisé en ce qu'il comporte les étapes suivantes :

- choix et détermination de la proportion pondérale de chacun des constituants du mélange ternaire en fonction de la densité finale recher-

chée pour le matériau ;
- préparation de la matière organique et incorporation du métal sous forme pulvérulente dans cette matière organique en maintenant le mélange sous agitation vigoureuse ;
- incorporation au mélange précédent par petites quantités de microsphères sous agitation lente ;
- homogénéisation du produit obtenu ;
- dégazage du produit obtenu sous vide ;
- transfert du mélange obtenu dans un moule et polymérisation du matériau organique en liaison avec un moyen pour éviter la décantation des particules métalliques lourdes.

8. Procédé de préparation d'un matériau microporeux selon la revendication 7, caractérisé en ce que le moyen pour éviter la décantation des particules métalliques lourdes consiste à utiliser, pour réaliser le mélange, un composant organique à viscosité élevée et à accélérer sa polymérisation.

9. Procédé de préparation d'un matériau microporeux selon la revendication 7, caractérisé en ce que le moyen pour éviter la décantation des particules métalliques lourdes consiste à utiliser, pour réaliser le mélange, un composant organique solide à la température ambiante, à le mélanger aux autres composants sous forme pulvérulente et à le polymériser à chaud.

10. Procédé de préparation d'un matériau microporeux selon la revendication 7, caractérisé en ce que le moyen pour éviter la décantation des particules métalliques lourdes consiste à utiliser, pour réaliser le mélange, un moule tournant autour d'un axe horizontal à une vitesse supérieure à celle qui correspondrait à un début de décantation des particules métalliques et inférieure à celle qui tendrait à concentrer ces mêmes particules sur les parois du moule par effet centrifuge.

**Patentansprüche**

1. Poröses Material für die Dämpfung von Stoßwellen und Schallwellen, mit einstellbarer Dichte, enthalten zwischen 2 und 3, **dadurch gekennzeichnet** daß es gebildet wird durch eine zusammengesetzte Mischung, umfassend ein Harz mit einem Anteil von 24,4 bis 17,7 Gew.-%, dünnwandige Mikrokugeln mit einem Anteil von 0,6 bis 0,3 Gew.-% und einem Metall oder einer metallischen Legierung, schwer, wobei der Metallanteil in der Mischung die Größenordnung 75% bis 82% aufweist.

2. Poröses Material nach Anspruch 1, dadurch gekennzeichnet, daß das Harz ausgewählt wird unter Duroplasten, Thermoplasten, strahlungsvernetzbaren und vulkanisierbaren Harzen.

3. Poröses Material nach Anspruch 2, dadurch gekennzeichnet, daß das Harz gewählt wird aus der Gruppe, die die Polyepoxide, das Polyurethan, das Polysiloxan, das Harnstoff-Formol (uréeformol) und die Gummi- bzw. Kautschukderivate (caoutchoucs derivés) umfaßt.

4. Poröses Material nach einem der Ansprüche 1 bis 3, dadurch gekennzeichnet, daß die hohlen Mikrokugeln aus einem mineralischen Material sind.

5. Poröses Material nach einem der Ansprüche 1 bis 3, dadurch gekennzeichnet, daß die hohlen Mikrokugeln aus einem organischen Material sind.

6. Poröses Material nach einem der Ansprüche 4 und 5, dadurch gekennzeichnet, daß die hohlen Mikrokugeln einen vorzugsweise zwischen $0,1\mu m$ und $100\mu m$ enthaltenen Durchmesser haben.

7. Verfahren zur Vorbereitung eines mikorporösen Materials nach einem der vorangehenden Ansprüche 1 bis 6, dadurch gekennzeichnet, daß es die folgenden Schritte umfaßt:

- Wahl und Festlegung des Gewichtsanteils jedes Bestandteils der ternären Mischung in Abhängigkeit von der für das Material angestrebten Enddichte;
- Herstellen des organischen Materials und diesem organischen Material das Metall in feinpulveriger Form beimengen;
- der vorhergehenden Mischung unter langsamem Umrühren kleine Mengen von Mikrokugeln beimengen;
- Homogenisierung des erhaltenen Produkts;
- Entgasung des erhaltenen Produkts im Vakuum;
- Transfer der erhaltenen Mischung in eine Form und Polymerisation des organischen Materials in Verbindung mit einem Mittel zum Vermeiden des Dekantierens bzw. Absitzens der schweren metallischen Teilchen.

8. Herstellungsverfahren eines mikroporösen Materials nach Anspruch 7, dadurch gekennzeichnet, daß das Mittel zum Vermeiden des Absitzens der schweren metallischen Teilchen beim Herstellen der Mischung darin besteht, einen organischen Bestandteil mit einer hohen Viskosität zu verwenden und seine Polymerisierung zu beschleunigen.

9. Herstellungsverfahren eines mikroporösen Materials nach Anspruch 7, dadurch gekennzeichnet, daß das Mittel zum Vermeiden des Absitzens der schweren metallischen Teilchen beim Herstellen der Mischung darin besteht, einen festen organischen Bestandteil mit Umgebungstemperatur zu verwenden, ihn den anderen Bestandteilen in feinpulveriger Form beizumischen und ihn warm zu polymerisieren.

10. Herstellungsverfahren eines mikroporösen Materials nach Anspruch 7, dadurch gekennzeichnet, daß das Mittel zum Vermeiden des Absitzens der schweren metallischen Teilchen beim Herstellen der Mischung darin besteht, eine Form zu verwenden, die sich um eine horizontale Achse mit einer Geschwindigkeit dreht, die größer ist als die, welche dem Beginn eines Absitzens der metallischen Teilchen entspricht, und kleiner als die, welche bestrebt wäre, dieselben Teilchen durch Zentrifugaleffekt auf den Wänden der Form zu konzentrieren.

**Claims**

1. Porous material for the damping of shock waves and sound waves, with adjustable density of between 2 and 3, characterized in that it consists of a composite mixture comprising a resin in a proportion of 24.4 to 17.7 % by weight, hollow thin-walled microspheres in a proportion of 0.6 to 0.3 % by weight and a heavy metal or metal alloy, the proportion of metal in the mixture being of the order of 75 % to 82 %.

2. Porous material according to Claim 1, characterized in that the resin is chosen from thermosetting, thermoplastic, radiation-induced crosslinkable and vulcanizable resins.

3. Porous material according to Claim 2, characterized in that the resin is chosen from the group comprising polyepoxides, polyurethane, polysiloxane, ureaformaldehyde and derived rubbers.

4. Porous material according to any one of Claims 1 to 3, characterized in that the hollow microspheres are made of an inorganic material.

5. Porous material according to any one of Claims 1 to 3, characterized in that the hollow microspheres are made of an organic material.

6. Porous material according to either of Claims 4 and 5, characterized in that the hollow microspheres have a diameter of preferably between 0.1 μm and 100 μm.

7. Method for preparing a microporous material according to any one of the preceding Claims 1 to 6, characterized in that it includes the following steps:

- selecting and determining the proportion by weight of each of the constituents of the ternary mixture as a function of the final density desired for the material;
- preparing the organic material and incorporating the metal in pulverulent form into this organic mixture while maintaining the mixture under vigorous agitation;
- incorporation into the above mixture of small quantities of microspheres under slow agitation;
- homogenization of the product obtained;
- degassing the obtained product under vacuum;
- transferring the obtained mixture into a mould and polymerization of the organic material in conjunction with a means for preventing settling of the heavy metal particles.

8. Method for preparing a microporous material according to Claim 7, characterized in that the means for preventing settling of the heavy metal particles consists in using, to produce the mixture, an organic component with high viscosity and in accelerating its polymerization.

9. Method for preparing a microporous material according to Claim 7, characterized in that the means for preventing settling of the heavy metal particles consists in using, to produce the mixture, an organic component which is solid at room temperature and in mixing it with the other components in pulverulent form and in polymerizing it at high temperature.

10. Method for preparing a microporous material according to Claim 7, characterized in that the means for preventing settling of the heavy metal particles consists in using, to produce the mixture, a mould rotating about a horizontal axis at a speed greater than that which would correspond to onset of settling of the metal particles and less than that which would tend to concentrate these same particles on the walls of the mould by centrifugal effect.